# EUROPÄISCHE PATENTSCHRIFT

(11) **EP 0 663 320 B1**
(45) Veröffentlichungstag und Bekanntmachung des Hinweises auf die Patenterteilung: **28.01.1998**
(21) Anmeldenummer: 94118812.0
(22) Anmeldetag: 30.11.1994
(51) Int. Cl.: B60Q 1/06, B60Q 1/068

(54) **Lichteinheit für Kraftfahrzeuge**
Lighting unit for vehicle
Unité d'éclairage pour véhicule

(30) Priorität: 16.12.1993 DE 4342882
(43) Veröffentlichungstag der Anmeldung: 19.07.1995
(73) Patentinhaber: Hella KG Hueck & Co., 59552 Lippstadt (DE)
(72) Erfinder: Kemper, Wolfgang, D-59602 Rüthen (DE); Briese, Heiko, D-59555 Lippstadt (DE)

(56) Entgegenhaltungen:
- EP-A- 0 268 442
- US-A- 4 959 758

## Beschreibung

Die Erfindung betrifft eine Lichteinheit für Kraftfahrzeuge, mit einem von einer lichtdurchlässigen Abschlußscheibe abgeschlossenen topfförmigen Gehäuse, in welches mehrere nebeneinander angeordnete Reflektoren eingesetzt sind, mit einer ersten und zweiten Einstellvorrichtung, durch welche ein Reflektor um eine horizontale und vertikale Achse verschwenkbar ist, wobei der verschwenkbare Reflektor durch die erste Einstellvorrichtung sowohl fernverstellbar als auch am Gehäuse manuell verstellbar ist, und mit einem hülsenförmigen Wandabschnitt des Gehäuses, welcher unterhalb der horizontalen Achse angeordnet ist, mit seiner Mittelachse in Lichtaustrittsrichtung verläuft und sowohl zur Aufnahme eines fernbetätigbaren Stellergehäuses als auch eines an der Lichteinheit manuell betätigbaren Winkelgetriebes mit einem Zahnradpaar dient, von dem ein Zahnrad drehfest mit einer starren Welle verbunden ist, welche mit ihrer Längsachse vertikal verläuft und mit ihrem nach oben gerichteten Endabschnitt in eine Lageröffnung in der oberen Seitenwand des Gehäuses eingreift und an der Außenseite der oberen Seitenwand eine Handhabe zu ihrem manuellen Verdrehen aufweist.

Eine solche Lichteinheit für Kraftfahrzeuge ist aus der DE 31 44 142 A1 bekannt. Hierbei ist an die Rückwand des topfförmigen Gehäuses der das Winkelgetriebe und das fernbetätigbare Stellergehäuse aufnehmende hülsenförmige Wandabschnitt angeformt, durch welchen in der Rückwand des Gehäuses eine Öffnung besteht und welcher mit einem Endabschnitt in das Innere des Gehäuses ragt und mit dem anderen Endabschnitt von der Rückwand des Gehäuses nach außen absteht. Das fernbetätigbare Stellergehäuse ist von der Rückseite des Gehäuses her unter Zwischenschaltung einer Ringdichtung auf den hülsenförmigen Wandabschnitt aufgesetzt und mit diesem durch einen Drehverschluß verbunden. Das fernbetätigbare Stellergehäuse ist über einen in Lichtaustrittsrichtung verlaufenden Verstellbolzen mit dem um eine horizontale Achse verschwenkbaren Reflektor verbunden. Der Verstellbolzen weist auf der Seite des Stellergehäuses einen Kugelkopf auf, welcher in eine Gelenkpfanne des Stellergehäuses eingreift, und weist auf der Seite des Reflektors einen Gewindeschaft auf, welcher in eine Mutter des Reflektors eingeschraubt ist. Durch das fernbetätigbare Stellergehäuse ist der Verstellbolzen in Richtung seiner Längsachse verstellbar und schwenkt dabei den Reflektor um die oberhalb des Stellergehäuses verlaufende horizontale Achse. Zwischen dem Gewindeschaft und dem Kugelkopf weist der Verstellbolzen einen im Querschnitt quadratischen Abschnitt auf, auf welchen ein Zahnrad mit einer entsprechenden zentralen Durchgangsöffnung mit Spiel aufgeschoben ist. Die Zahnräder des Winkelgetriebes sind Kegelzahnräder. Das auf den Verstellbolzen aufgeschobene Zahnrad weist seine Zähne auf der dem Stellergehäuse zugewandten Seite auf und kämmt mit seinen Zähnen in den Zähnen des drehfest mit der Welle verbundenen Zahnrades. Letzteres Zahnrad ist zusammen mit der Welle einstückig aus Kunststoff hergestellt und in einem zur Vorderseite der Lichteinheit hin geöffneten Ausschnitt des hülsenförmigen Wandabschnitts drehbar gelagert. Das Zahnradpaar ist im Inneren des hülsenförmigen Wandabschnitts angeordnet, welcher von der Innenseite des Gehäuses her durch einen Deckel abgedeckt ist. Der Deckel ist mittels Befestigungsschrauben, welche in Sacklöcher des hülsenförmigen Wandabschnitts eingreifen, befestigt und weist für den Verstellbolzen und des auf den Verstellbolzen aufgeschobenen Zahnrades eine zentrale Öffnung auf. Dabei liegt das Zahnrad an dem inneren Randbereich der Öffnung des Deckels an und greift mit einem hülsenförmigen Ansatz in die Öffnung des Deckels mit Spiel hinein. Der Deckel greift mit einem zur Rückwand des Gehäuses hin gerichteten Randabschnitt in eine an das Zahnrad der Welle angrenzende umlaufende Nut der Welle mit Spiel ein. Dadurch ist die Welle am hülsenförmigen Wandabschnitt sowohl radial als auch axial arretiert. Die Welle verläuft zwischen dem hülsenförmigen Wandabschnitt und der oberen Seitenwand des Gehäuses in einem geringen Abstand zur Rückwand des Gehäuses und weist in diesem Abschnitt einen kleineren Querschnitt auf. Die Lageröffnung in der oberen Seitenwand des Gehäuses ist hülsenartig ausgeführt und die Welle weist in der hülsenartigen Lageröffnung umlaufend eine Ringnut für eine Ringdichtung auf, welche dicht an der Innenseite der Lageröffnung anliegt. Die Welle ragt aus der Lageröffnung der oberen Seitenwand des Gehäuses nach außen nur sehr wenig heraus und weist eine in ihre Stirnfläche eingebrachte Handhabe auf, durch welche die Welle mittels eines Werkzeuges manuell an der Lichteinheit verdrehbar ist. Bei einem fernbetätigbaren Verstellen des Reflektors wird der Verstellbolzen, ohne ihn zu verdrehen, im Richtung seiner Längsachse verstellt, während bei einem manuellen Verstellen des Reflektors an der Lichteinheit der Verstellbolzen über die Welle und das Winkelgetriebe verdreht wird und die starr mit dem Reflektor verbundene Mutter axial verstellt.

Bei einer solchen bekannten Lichteinheit ist es nachteilig, daß das fernbetätigbare Stellergehäuse von der Rückseite des Gehäuses absteht und somit leicht beschädigt werden kann. Außerdem kann bei unsachgemäßer Montage des fernbetätigbaren Stellergehäuses eine Undichtigkeit zum Gehäuseinneren hin bestehen. Zudem ist die Montage der starren Welle umständlich und zeitaufwendig, da sie genau ausgerichtet werden muß, um zu erreichen, daß beim Aufsetzen des Deckels dieser mit seinem Randabschnitt in die umlaufende Nut der Welle eingreift. Bei einer automatischen Fertigung ist es von Nachteil, daß die starre Welle wie andere Teile der ersten Einstellvorrichtung vom Inneren des Gehäuses her montiert werden müssen.

Aufgabe der Erfindung ist es, die im Oberbegriff des Anspruchs 1 beschriebene Lichteinheit für Kraftfahrzeuge derart zu gestalten, daß
a) die gesamte erste Einstellvorrichtung im Inneren der Lichteinheit geschützt angeordnet ist und dabei die Lichteinheit durch die erste Einstellvorrichtung in ihrer Tiefe nicht größer bauen muß,
b) die der manuellen Verstellung am Reflektor des Scheinwerfers dienende starre Welle von der Außenseite der oberen Seitenwand des Gehäuses her durch die Lageröffnung des Gehäuses hindurch leicht und einfach in ihre genaue Lage eingesetzt werden kann,
c) das topfförmige Gehäuse, auch wenn es eine großflächige obere und untere Seitenwand und für mehrere Reflektoren eine gemeinsame große Öffnung in seiner Rückwand aufweist, ausschließlich durch Halteelemente der ersten Einstellvorrichtung ausreichend versteifbar ist und
d) die Halteelemente nur wenig zusätzlichen Raum wegen ihrer versteifenden Wirkung einnehmen müssen und keine zusätzlichen separaten Teile sind.

Diese Aufgabe wird nach der Erfindung dadurch gelöst, daß
- von dem hülsenförmigen Wandabschnitt und einem zwischen ihm und der oberen Seitenwand verlaufenden rinnenartigen Wandabschnitt ein Steg gebildet ist, welcher zwischen zwei benachbarten Reflektoren verläuft und in einem Abstand zur Rückseite des topfförmigen Gehäuses an die Innenseite der oberen und unteren Seitenwand des Gehäuses angeformt ist,
- die starre Welle der ersten Einstellvorrichtung in den rinnenartigen Wandabschnitt des Steges eingesetzt ist,
- eine für mehrere Reflektoren dienende gemeinsame Öffnung in der Rückwand des topfartigen Gehäuses von der Rückseite der Lichteinheit her gesehen im Bereich der ersten Einstellvorrichtung so groß ausgeführt ist, daß durch die Öffnung hindurch die Rückseite des Steges entformbar ist.

Hierbei ist der Steg nicht nur durch seinen rinnenartigen Wandabschnitt und seinen hülsenförmigen Wandabschnitt in sich sehr verwindungssteif, sondern als zusätzliches Versteifungsmittel dient die in den rinnenartigen Wandabschnitt eingesetzte starre Welle und das in den hülsenförmigen Wandabschnitt eingesetzte Stellergehäuse. Außerdem ist die Handhabe zum manuellen Verstellen des Reflektors an der Lichteinheit sehr gut erreichbar, da sie sehr nahe zum vorderen Rand des topfförmigen Gehäuses liegen kann. Beim Einführen der Welle durch die Lageröffnung in der oberen Seitenwand dient der rinnenartige Wandabschnitt als Einfädelungshilfe. Hierbei darf der Außendurchmesser des drehfest mit der Welle verbundenen Zahnrades zumindest nicht größer sein als der Innendurchmesser der Lageröffnung.

Weiterhin ist es vorteilhaft, wenn die Handhabe der Welle ein aus der Lageröffnung der oberen Seitenwand des Gehäuses nach außen herausragendes Griffteil ist, welches mit einer angrenzenden Schulter an dem äußeren Randbereich der Lageröffnung anliegt. Dadurch ist ein Verdrehen der Welle sowohl von Hand als auch mittels eines Werkzeuges möglich. Außerdem ist die Welle von Hand leicht durch die Lageröffnung der oberen Seitenwand des Gehäuses hindurch einführbar und die genaue Lage der Welle gegeben, wenn die Schulter an den äußeren Randbereich der Lageröffnung anschlägt.

Vorteilhaft ist es weiterhin, wenn die Innenseite des rinnenartigen Wandabschnitts auf seiner gesamten Länge als Lagerfläche für die starre Welle dient. Hierbei sollte die Welle bis auf die Handhabe über ihre gesamte Länge einen gleichgroßen Außendurchmesser aufweisen.

Von Vorteil ist es weiterhin, wenn die Tiefe des rinnenartigen Wandabschnittes größer ist als der Außendurchmesser der Welle. Dadurch ist sowohl eine sehr sichere Halterung der Welle als auch eine sehr hohe Verwindungssteifigkeit des rinnenartigen Wandabschnitts gegeben.

Ein weiterer Vorteil ist es, wenn der rinnenartige Wandabschnitt mit seiner offenen Seite zur Vorderseite der Lichteinheit hin gerichtet ist, mit einem Ende an die Mantelfläche des hülsenförmigen Wandabschnitts angeformt ist und mit seinen beiden in Richtung seiner Längsausdehnung verlaufenden freien Rändern zusammen mit dem der Vorderseite der Lichteinheit zugewandten Rand des hülsenförmigen Wandabschnitts annähernd in einer Fläche verläuft. Eine solche Lösung ist sehr einfach und kostengünstig herstellbar, und der LWR-Steller ist durch die große Öffnung in der Rückwand des topfförmigen Gehäuses her montierbar. In diesem Zusammenhang ist es weiterhin vorteilhaft, wenn der Steg zwischen dem hülsenförmigen Wandabschnitt und der unteren Seitenwand des Gehäuses von einem Wandabschnitt mit zumindest einer Versteifungsrippe gebildet ist. Dadurch ist unter Beibehaltung einer hohen Verwindungssteifigkeit des Steges die Lage des hülsenförmigen Wandabschnitts und somit des fernbetätigbaren Stellergehäuses in der Höhe variabel ausführbar.

Zudem ist es vorteilhaft, wenn die Lageröffnung in der oberen Seitenwand des Gehäuses hülsenförmig ausgeführt ist, wobei der zur Vorderseite der Lichteinheit hin gerichtete Mantelflächenabschnitt der Hülse von der Innenseite der oberen Seitenwand des Gehäuses gebildet ist und einen angeformten Ansatz einer ortsfesten Lagerstelle für den verschwenkbaren Reflektor trägt. Dadurch können die horizontale und vertikale Achse, um welche der Reflektor verschwenkbar ist, bei einem einfachen Aufbau für die ortsfeste Lagerstelle des Reflektors genau in einem rechten Winkel zueinander verlaufen.

Ferner ist es vorteilhaft, wenn die Öffnung in der Rückwand des Gehäuses im Bereich des Steges in ihrer Größe mindestens der Länge des Steges entspricht. Dadurch ist der Steg auch auf seiner Rückseite ohne verstellbare Werkzeugteile entformbar.

Ebenfalls ist es vorteilhaft, wenn die Welle im Querschnitt x-förmig gestaltet ist. Dadurch weist sie bei geringem Werkstoffverbrauch zu ihrer Herstellung eine große Biegesteifigkeit auf.

Bei einer besonders vorteilhaften Weiterbildung der Erfindung sind die die erste Einstellvorrichtung zwischen sich aufnehmenden beiden schalenförmigen Reflektoren eine starre Einheit, welche über einen in Lichtaustrittsrichtung verlaufenden Verstellbolzen der ersten Einstellvorrichtung gekoppelt und um die horizontale Achse schwenkbar ist. Eine solche Lösung ist sehr einfach und kostengünstig herstellbar, da für beide Reflektoren nur eine erste Einstellvorrichtung notwendig ist.

Weiterhin ist es vorteilhaft, wenn an der Außenseite der oberen Seitenwand des topfförmigen Gehäuses nahe der Handhabe der ersten Einstellvorrichtung eine Handhabe der zweiten Einstellvorrichtung angeordnet ist, wobei die Handhabe der zweiten Einstellvorrichtung mit dem verschwenkbaren Reflektor über zwei Winkelgetriebe und einer die beiden Winkelgetriebe miteinander koppelnden horizontalen Welle verbunden ist, welche in eine in die Innenseite der Rückwand des Gehäuses eingebrachte rinnenartige Lagerschale eingreift. Hierbei ist für das fernbetätigbare Stellergehäuse, obwohl die Handhaben beider Einstellvorrichtungen nahe beieinander liegen und somit sehr gut bedienbar sind, weiterhin ausreichend Raum im Inneren des Gehäuses gegeben, da die Welle keinen für das Stellergehäuse notwendigen Raum einnimmt.

Ein Ausführungsbeispiel nach der Erfindung ist in der Zeichnung dargestellt, und zwar zeigen
- Figur 1: einen vertikalen Schnitt durch eine Lichteinheit für Kraftfahrzeuge mit einer ersten Einstellvorrichtung,
- Figur 2: einen Schnitt nach der Linie A-A der Figur 1,
- Figur 3: eine Ansicht aus Richtung x auf die Rückseite der Lichteinheit ohne einen Deckel, welcher eine Öffnung in der Rückseite der Lichteinheit verschließt,
- Figur 4: einen Schnitt nach der Linie B-B der Figur 3 und
- Figur 5: einen Schnitt nach der Linie C-C der Figur 3.

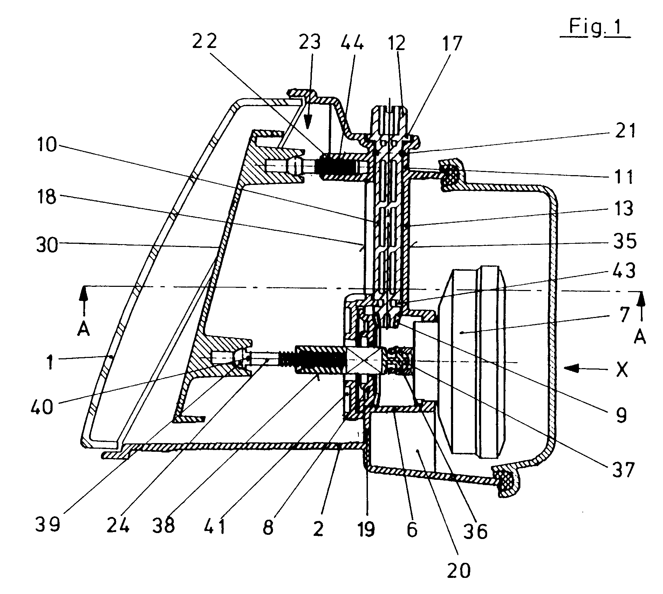

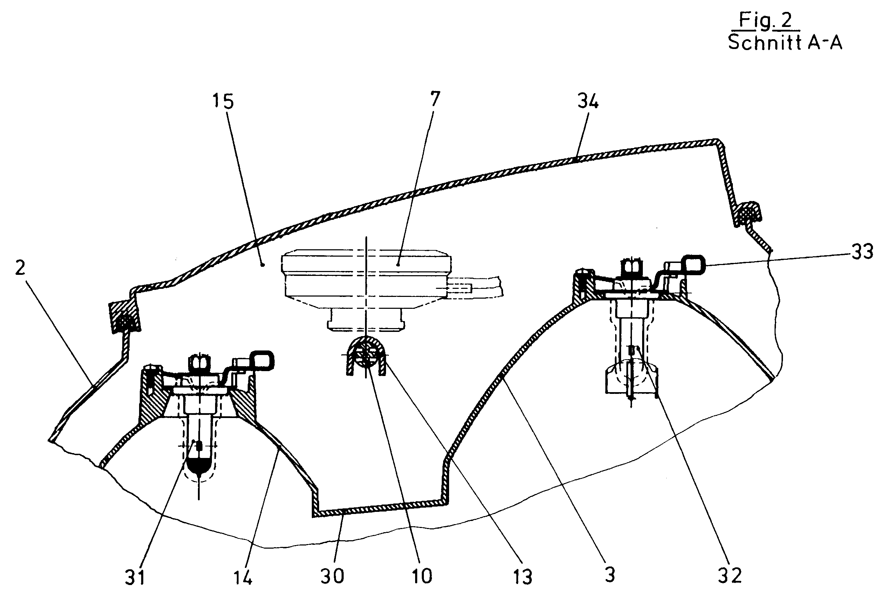

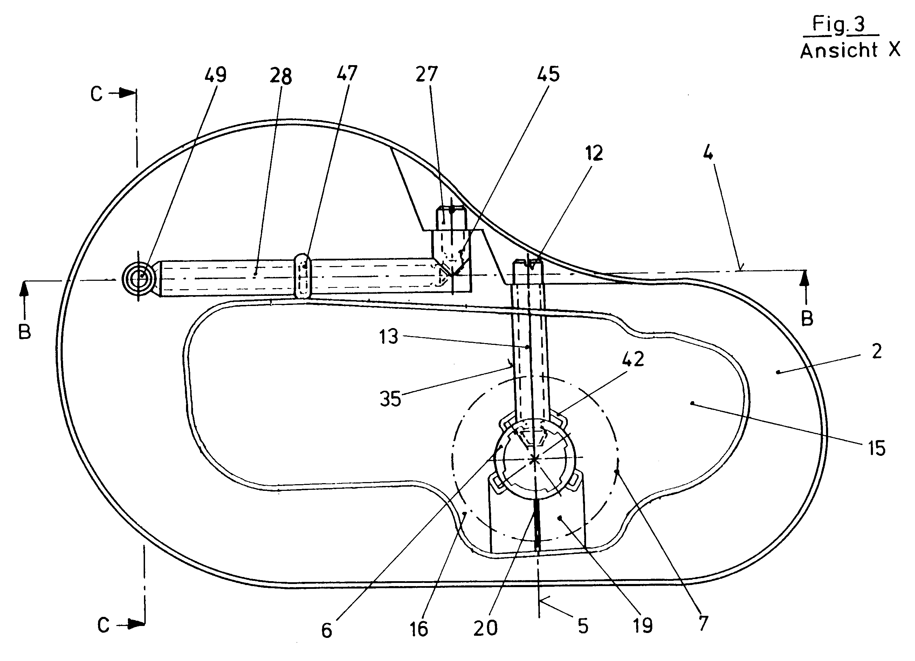

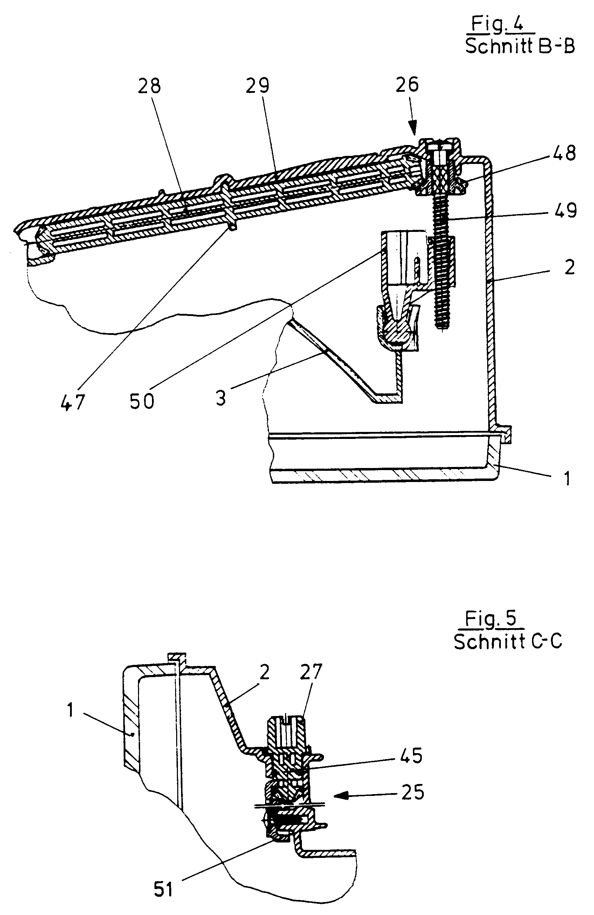

Die Lichteinheit weist ein aus Kunststoff bestehendes topfförmiges Gehäuse (2) mit einer großflächigen oberen und unteren Seitenwand auf und eine schalenförmige lichtdurchlässige Abschlußscheibe (1), welche die Vorderseite des topfförmigen Gehäuses (2) verschließt. In das von dem topfförmigen Gehäuse (2) und der Abschlußscheibe (1) gebildete Innere der Lichteinheit sind zwei schalenförmige Reflektoren (3, 14) eingesetzt, welche an ihren sich benachbarten Randabschnitten durch eine Wandung (30) verbunden sind und zusammen einstückig aus Kunststoff hergestellt sind. In den Scheitelbereich beider Reflektoren (3, 14) ist eine zur Aufnahme einer Lampe (31 bzw. 32) dienende Öffnung (15) eingebracht. Die Lampen (31, 32) liegen mit einem umlaufenden Flansch ihres Sockels an dem Außenrand der Öffnung des Reflektors an und sind durch eine aus Federdraht bestehende Haltefeder (33) an dem Reflektor (3 bzw. 14) arretiert. Die beiden Reflektoren (3, 14) sind durch eine erste Einstellvorrichtung (siehe Figur 1) um eine horizontale Achse (4) und durch eine zweite Einstellvorrichtung (siehe Figuren 4 und 5) um eine vertikale Achse (5) verschwenkbar. Um die Lampen (31, 32) und ein fernbetätigbares Stellergehäuse (7) der ersten Einstellvorrichtung leicht und einfach wechseln zu können, ist in die Rückwand des topfförmigen Gehäuses (2) eine große Öffnung (15) eingebracht, welche durch einen Deckel (34) verschlossen ist. Das fernbetätigbare Stellergehäuse (7), welches in den Figuren 2 und 3 gestrichelt dargestellt ist, ist zwischen den beiden schalenförmigen Reflektoren (3, 14) angeordnet und von einem Steg (35) getragen, welcher in seiner Längsausdehnung vertikal verläuft und die obere und untere großflächige Seitenwand des topfförmigen Gehäuses (2) miteinander verbindet. Der Steg (35) weist einen hülsenförmigen Wandabschnitt (6) auf, welcher mit seiner Mittelachse in Lichtaustrittsrichtung verläuft und auf dessen zur Rückseite der Lichteinheit hin gerichteten Rand das fernbetätigbare Stellergehäuse (7) aufgesetzt ist und mittels eines Drehverschlusses fest mit dem hülsenförmigen Wandabschnitt (6) verbunden ist. Das fernbetätigbare Stellergehäuse (7) weist im Inneren des hülsenförmigen Wandabschnittes (6) eine in Lichtaustrittsrichtung verstellbare Gelenkschale (36) auf, in welches der Gelenkkopf (37) eines aus Kunststoff bestehenden Verstellelements (38) eingreift. Das Verstellelement (38) weist einen quadratischen Querschnitt und eine zum Reflektor hin geöffnete Gewindebohrung auf, in welcher ein Verstellbolzen (24) mit einem Gewindeschaft eingeschraubt ist. Der Verstellbolzen (24) weist an dem in Lichtaustrittsrichtung gerichteten freien Ende einen Kugelkopf (39) auf, welcher in einer Kugelschale (40), der zwischen den Reflektoren (3, 14) verlaufenden Wandung (30) eingreift. Bei einem axialen Verstellen des Verstellbolzens (34) durch das fernbetätigbare Stellergehäuse (7) schwenkt der Reflektor um die horizontale Achse (4). Die Betätigung des fernbetätigbaren Stellergehäuses (7) kann pneumatisch oder elektrisch erfolgen und zum manuellen Verschwenken der Reflektoren (3, 14) weist die erste Einstellvorrichtung zusätzlich ein aus einem Zahnradpaar (8, 9) bestehendes Winkelgetriebe, eine Handhabe (12) an der Außenseite der oberen Seitenwand des Gehäuses (2) und eine die Handhabe (12) mit dem Zahnradpaar (8, 9) verbindende vertikal verlaufende starre Welle (10) auf. Das Zahnrad (8), welches wie das Zahnrad (9) ein Kegelzahnrad ist, weist eine zentrale quadratische Öffnung auf, durch welche mit Spiel das einen entsprechend großen quadratischen Querschnitt aufweisende Verstellelement (38) hindurchgeht. Das Zahnrad (8) ist in den hülsenförmigen Wandabschnitt (6) eingesetzt und liegt mit einem aus dem hülsenförmigen Wandabschnitt (6) herausragenden umlaufenden Randabschnitt an dem in Lichtaustrittsrichtung gerichteten Rand des hülsenförmigen Wandabschnitts (6) an, während im Inneren des hülsenförmigen Wandabschnitts (6) zwischen der Mantelfläche des Zahnrades (8) und der Innenseite des hülsenförmigen Wandabschnitts (6) ein kleines Spiel besteht. Auf den hülsenförmigen Wandabschnitt (6) ist von der Vorderseite der Lichteinheit her ein Deckel (41) aufgesetzt, welcher das Zahnrad (8) axial an dem hülsenförmigen Wandabschnitt (6) arretiert und zentral eine kreisrunde Öffnung für das durch den Deckel (41) hindurchgehende Verstellelement (38) aufweist. Der Deckel (41) weist an seinem äußeren umlaufenden Rand Rastarme (nicht dargestellt) auf, welche in entsprechende Taschen (42) an der Mantelfläche des hülsenförmigen Wandabschnittes (6) selbstrastend eingreifen. Das Zahnrad (8) weist auf dem dem Stellergehäuse (7) zugewandten äußeren ringförmigen Randbereich seine Zähne auf, welche in den Zähnen des Zahnrades (9) kämmen, welches an ein freies Ende der aus Kunststoff bestehenden Welle (10) angeformt ist. An das andere freie Ende der Welle (10) ist die von einem Griffteil gebildete Handhabe (12) angeformt. Die Welle (10) ist in ihrem Querschnitt x-förmig gestaltet und in einem rinnenförmigen Wandabschnitt (13) des Steges (35) gelagert, der zwischen der oberen Seitenwand des Gehäuses (2) und dem hülsenförmigen Wandabschnitt (6) verläuft. Der rinnenförmige Wandabschnitt (13) ist zur Vorderseite der Lichteinheit hin geöffnet und verläuft mit seinen freien Rändern zusammen mit dem als Anlagefläche für das Zahnrad (8) dienenden Rand des hülsenförmigen Wandabschnitts (6) in einer Fläche (18). In die Welle (10) ist angrenzend an das Zahnrad (9) umlaufend eine Ringnut (43) eingebracht, in welche der Deckel (41) mit einem zur Rückseite der Lichteinheit hin gerichteten Randabschnitt mit Spiel eingreift. Die Welle (10) ist angrenzend an die Handhabe (12) in einer Hülse (21) der oberen Seitenwand des Gehäuses (2) gelagert und liegt mit einer an die Handhabe (12) angrenzenden umlaufenden Schulter (17) an dem äußeren Randbereich der Hülse (21) an. An einen zur Vorderseite der Lichteinheit hin gerichteten Mantelflächenabschnitt der Hülse (21) ist ein Ansatz (22) einer ortsfesten Lagerstelle (23) des Reflektors (3, 14) angeformt. In den Ansatz (22) ist eine Sackbohrung eingebracht, in welcher ein Bolzen (44) eingepreßt ist, welcher mit seinem in Lichtaustrittsrichtung gerichteten freien Ende gelenkig mit der zwischen den beiden Reflektoren (3, 14) verlaufenden Wandung (30) verbunden ist. Zwischen dem hülsenförmigen Wandabschnitt (6) und der unteren Seitenwand des Gehäuses (7) besteht der Steg (35) aus einem flächigen Wandabschnitt (19), welcher in der Fläche (18) verläuft und an der Rückseite eine angeformte Versteifungsrippe (20) aufweist. Der Wandabschnitt (19) verbindet zusammen mit der Versteifungsrippe (20) den hülsenförmigen Wandabschnitt (6) mit der unteren Seitenwand das Gehäuses (2). Die Öffnung (15) in der Rückwand des topfförmigen Gehäuses (2) ist im Bereich (16) des Steges (35) mindestens so breit ausgeführt, wie der Steg (35) lang ist.

Die zweite Einstellvorrichtung, durch welche die Reflektoren (3, 14) um die vertikale Achse (5) verschwenkbar ist, weist eine Handhabe (27) in der Nähe der Handhabe (12) der ersten Einstellvorrichtung auf. Die Handhabe (27) ist an einem Drehteil (45) angeformt, welches in einer Lageröffnung der oberen Seitenwand des Gehäuses (2) verdrehbar gelagert ist und an dem in das Innere des Gehäuses (2) ragenden Ende ein Zahnrad eines Winkelgetriebes (25) trägt, welches durch eine an die Innenseite des Gehäuses (2) angeschraubte Kappe (51) abgedeckt und arretiert ist. Das Winkelgetriebe (25) ist über eine starre Welle (28), welche im Querschnitt x-förmig gestaltet ist, mit einem zweiten Winkelgetriebe (26) gekoppelt. Die starre Welle (28) ist in einer in die Innenseite der Rückwand des Gehäuses (2) eingebrachten rinnenartigen Lagerschale (29) gelagert und greift mit einem zentralen umlaufenden Bund (47) in eine entsprechende Nut der rinnenartigen Lagerschale (29) ein. Dadurch ist die Welle (28) in der rinnenartigen Lagerschale (29) axial arretiert. An die beiden freien Enden der starren Welle (28) ist jeweils ein Zahnrad (8, 9) der beiden Winkelgetriebe (25, 26) angeformt. Das an die Welle (28) angeformte Zahnrad des zweiten Winkelgetriebes (26) kämmt mit seinen Zähnen in den Zähnen eines Zahnrades (48), welches drehfest mit einem Verstellbolzen (49) verbunden ist, der in einer Lageröffnung des Gehäuses (2) verdrehbar ist und mit einem in Lichtaustrittsrichtung gerichteten Endabschnitt in einer Mutter eines Gelenkteils (50) des Reflektors (3) eingreift.

### Bezugszeichenliste

- 1: Abschlußscheibe
- 2: Gehäuse
- 3: Reflektor
- 4: horizontale Achse
- 5: vertikale Achse
- 6: hülsenförmiger Wandabschnitt
- 7: Stellergehäuse
- 8: Zahnrad
- 9: Zahnrad
- 10: Welle
- 11: Lageröffnung
- 12: Handhabe
- 13: rinnenartiger Wandabschnitt
- 14: Reflektor
- 15: Öffnung
- 16: Bereich
- 17: Schulter
- 18: Fläche
- 19: Wandabschnitt
- 20: Versteifungsrippe
- 21: Hülse
- 22: Ansatz
- 23: ortsfeste Lagerstelle
- 24: Verstellbolzen
- 25: Winkelgetriebe
- 26: Winkelgetriebe
- 27: Handhabe
- 28: Welle
- 29: Lagerschale
- 30: Wandung
- 31: Lampe
- 32: Lampe
- 33: Haltefeder
- 34: Deckel
- 35: Steg
- 36: Gelenkschale
- 37: Gelenkkopf
- 38: Verstellelement
- 39: Kugelkopf
- 40: Kugelschale
- 41: Deckel
- 42: Taschen
- 43: Ringnut
- 44: Bolzen
- 45: Drehteil
- 46: Deckel
- 47: Bund
- 48: Zahnrad
- 49: Verstellbolzen
- 50: Gelenkteil
- 51: Kappe

## Patentansprüche

1. Lichteinheit für Kraftfahrzeuge, mit einem von einer lichtdurchlässigen Abschlußscheibe (1) abgeschlossenen topfförmigen Gehäuse (2), in welches mehrere nebeneinander angeordnete Reflektoren (3) eingesetzt sind, mit einer ersten und zweiten Einstellvorrichtung, durch welche ein Reflektor (3) um eine horizontale und vertikale Achse (4, 5) verschenkbar ist, wobei der verschwenkbare Reflektor (3) durch die erste Einstellvorrichtung sowohl fernverstellbar als auch am Gehäuse (2) manuell verstellbar ist, und mit einem hülsenförmigen Wandabschnitt (6) des Gehäuses (2), welcher unterhalb der horizontalen Achse (4) angeordnet ist, mit seiner Mittelachse in Lichtaustrittsrichtung verläuft und sowohl zur Aufnahme eines fernbetätigbaren Stellergehäuses (7) als auch eines am Gehäuse (2) manuell betätigbaren Winkelgetriebes mit einem Zahnradpaar (8, 9) dient, von dem ein Zahnrad (9) drehfest mit einer starren Welle (10) verbunden ist, welche mit ihrer Längsachse vertikal verläuft und mit ihrem nach oben gerichteten Endabschnitt in eine Lageröffnung (11) in der oberen Seitenwand des Gehäuses (2) eingreift und an der Außenseite der oberen Seitenwand eine Handhabe (12) zu ihrem manuellen Verdrehen aufweist,
dadurch gekennzeichnet, daß
- von dem hülsenförmigen Wandabschnitt (6) und einem zwischen ihm und der oberen Seitenwand des Gehäuses (2) verlaufenden rinnenartigen Wandabschnitt (13) ein Steg (35) gebildet ist, welcher zwischen zwei sich benachbarten Reflektoren (3, 14) verläuft und in einem Abstand zur Rückseite des topfförmigen Gehäuses (2) an die Innenseite der oberen und unteren Seitenwand des Gehäuses (2) angeformt ist,
- die starre Welle (10) der ersten Einstellvorrichtung in den rinnenartigen Wandabschnitt (13) des Steges (35) eingesetzt ist,
- eine für mehrere Reflektoren (3, 14) dienende gemeinsame Öffnung (15) in der Rückwand des topfartigen Gehäuses (2) von der Rückseite der Lichteinheit her gesehen, im Bereich (16) der ersten Einstellvorrichtung so groß ausgeführt ist, daß durch die Öffnung (15) hindurch die Rückseite des Steges (35) entformbar ist.

2. Lichteinheit nach Anspruch 1, dadurch gekennzeichnet, daß die Handhabe (12) der Welle (10) eine aus der Lageröffnung (12) der oberen Seitenwand des Gehäuses (2) nach außen herausragendes Griffteil ist, welches mit einer angrenzenden Schulter (17) an dem äußeren Randbereich der Lageröffnung (11) anliegt.

3. Lichteinheit nach Anspruch 1 oder 2, dadurch gekennzeichnet, daß die Innenseite des rinnenartigen Wandabschnittes (13) auf seiner gesamten Länge als Lagerfläche für die starre Welle (10) dient.

4. Lichteinheit nach einem der Ansprüche 1 bis 3, dadurch gekennzeichnet, daß die Tiefe des rinnenartigen Wandabschnitts (13) größer ist als der Außendurchmesser der Welle (10).

5. Lichteinheit nach einem der Ansprüche 1 bis 4, dadurch gekennzeichnet, daß der rinnenartige Wandabschnitt (13) mit seiner offenen Seite zur Vorderseite der Lichteinheit hin gerichtet ist, mit einem Ende an die Mantelfläche des hülsenförmigen Wandabschnitts (6) angeformt ist und mit seinen beiden freien Rändern zusammen mit dem der Vorderseite der Lichteinheit zugewandten Rand des hülsenförmigen Wandabschnitts (6) annähernd in einer Fläche (18) verläuft.

6. Lichteinheit nach einem der Ansprüche 1 bis 5, dadurch gekennzeichnet, daß der Steg (35) zwischen dem hülsenförmigen Wandabschnitt (6) und der unteren Seitenwand des Gehäuses (2) von einem Wandabschnitt (19) mit mindestens einer Versteifungsrippe (20) gebildet ist.

7. Lichteinheit nach einem der Ansprüche 1 bis 6, dadurch gekennzeichnet, daß die Lageröffnung (11) in der oberen Seitenwand des Gehäuses (2) von einer Hülse (21) gebildet ist, wobei der zur Vorderseite der Lichteinheit hin gerichtete Mantelflächenabschnitt der Hülse (21) von der Innenseite der oberen Seitenwand des Gehäuses (2) gebildet ist und einen angeformten Ansatz (22) einer ortsfesten Lagerstelle (23) für den verschwenkbaren Reflektor (3) trägt.

8. Lichteinheit nach einem der Ansprüche 1 bis 7, dadurch gekennzeichnet, daß die die erste Einstellvorrichtung zwischen sich aufnehmenden beiden schalenförmigen Reflektoren (3, 14) eine starre Einheit sind, welche über einen mit seiner Längsachse in Lichtaustrittsrichtung verlaufenden Verstellbolzen (24) mit der ersten Einstellvorrichtung gekoppelt ist.

9. Lichteinheit nach einem der Ansprüche 1 bis 8, dadurch gekennzeichnet, daß die Öffnung (15) in der Rückwand des Gehäuses (2) im Bereich des Steges (35) in ihrer Größe mindestens der Länge des Steges (35) entspricht.

10. Lichteinheit nach einem der Ansprüche 1 bis 9, dadurch gekennzeichnet, daß die Welle (10) im Querschnitt x-förmige gestaltet ist.

11. Lichteinheit nach einem der Ansprüche 1 bis 10, dadurch gekennzeichnet, daß an der Außenseite der oberen Seitenwand des topfförmigen Gehäuses (2) nahe der Handhabe (12) der ersten Einstellvorrichtung eine Handhabe (27) der zweiten Einstellvorrichtung angeordnet ist, wobei die Handhabe (27) der zweiten Einstellvorrichtung mit dem verschwenkbaren Reflektor (3) über zwei Winkelgetriebe (25, 26) und einer die beiden Winkelgetriebe (25, 26) miteinander koppelnden horizontalen starren Welle (28) verbunden ist, welche in eine in die Innenseite der Rückwand des Gehäuses (2) eingebrachte rinnenartige Lagerschale (29) eingreift.

## Claims

1. Light unit for motor vehicles, comprising a cupshaped housing (2), which is sealed off by a light-permeable cover (1) and into which are inserted alongside each other a plurality of reflectors (3), with a first and a second adjusting device by means of which a reflector (3) is pivotal around a horizontal and a vertical axis (4, 5), and the pivotal reflector (3) is adjustable both remotely by the first adjusting device and manually at the housing (2), and with a sleeveshaped wall section (6) of the housing (2) which is arranged below the horizontal axis (4) extending with its centre axis in the light emitting direction and serving to accommodate both a remote controlled adjustment housing (7) and an angular gearing with a pair of toothed wheels (8, 9) which is manually operated on the housing (2), of which one toothed wheel (9) is non-rotationally connected to a fixed shaft (10) which extends vertically with its longitudinal axis and engages with its upwardly oriented end section into a mounting opening (11) in the upper side wall of the housing (2) and which comprises at its outside of the upper side wall a handle (12) for manually turning it,
**characterised in that**
- a web (35) is formed by the sleeveshaped wall section (6) and a channellike wall section (13) which extends between said wall section and the upper side wall of the housing (2), and said web extends between two adjacent reflectors (3, 14) and is formed onto the inside of the upper and the lower side wall of the housing (2) at a distance from the rear of the cupshaped housing (2);
- the fixed shaft (10) of the first adjusting device is inserted into the channellike wall section (13) of the web (35);
- a communal opening (15), which serves a plurality of reflectors (3, 14), in the rear wall of the cupshaped housing (2) as seen from the rear of the light unit, is so large in the area (16) of the first adjusting device that the rear of the web (35) can be reshaped through the opening (15).

2. Light unit according to Claim 1, **characterised in that** the handle (12) of the shaft (10) is a handle element, which protrudes from the mounting opening (12) of the upper side wall of the housing (2) towards the outside and which abuts the outer edge area of the mounting opening (11) with an adjacent shoulder (17).

3. Light unit according to Claim 1 or 2, **characterised in that** the inside of the channellike wall section (13) serves over its entire length as a mounting surface for the fixed shaft (10).

4. Light unit according to one of Claims 1 to 3, **characterised in that** the depth of the channellike wall section (13) is greater than the outside diameter of the shaft (10).

5. Light unit according to one of Claims 1 to 4, **characterised in that** the channellike wall section (13) is with its open side oriented towards the front of the light unit, with one end formed onto the casing surface of the sleeveshaped wall section (6) and extends with its two free edges and the edge of the sleeve shaped wall section (6), which is oriented towards the front of the light unit, virtually in one surface (18).

6. Light unit according to one of Claims 1 to 5, **characterised in that** the web (35) between the sleeveshaped wall section (6) and the lower side wall of the housing (2) is formed by a wall section (19) with at least one reinforcing rib (20).

7. Light unit according to one of Claims 1 to 6, **characterised in that** the mounting opening (11) in the upper side wall of the housing (2) is formed by a sleeve (21), and the casing surface section of the sleeve (21), which is oriented towards the front of the light unit, is formed by the inside of the upper side wall of the housing (2) and carries a formed on extension (22) of a spatially fixed mounting point (23) for the pivotal reflector (3).

8. Light unit according to one of Claims 1 to 7, **characterised in that** the two cupshaped reflectors (3, 14), which jointly accommodate the first adjusting device, are a fixed unit is connected to the first adjusting device via an adjustment pin (24) which extends with its longitudinal axis in the direction of light emission.

9. Light unit according to one of Claims 1 to 8, **characterised in that** the opening (15) in the rear wall of the housing (2) in the area of the web (35) corresponds in its size at least with the length of the web (35).

10. Light unit according to one of Claims 1 to 9, **characterised in that** the shaft (10) is cross-sectionally X-shaped.

11. Light unit according to one of Claims 1 to 10, **characterised in that** on the outside of the upper side wall of the cupshaped housing (2) near the handle (12) of the first adjusting device is arranged a handle (27) of the second adjusting device, and the handle (27) of the second adjusting device is connected to the pivotal reflector (3) via two angular gearings (25, 26) and a horizontal fixed shaft (28) which interconnects the two angular gearings (25, 26) and which engages channellike mounting dish which has been inserted inside of the rear wall of the housing (2).

## Revendications

1. Unité d'éclairement pour des véhicules automobiles, comportant un boîtier en forme de pot (2) refermé par une plaque de fermeture transparente (1), dans lequel plusieurs réflecteurs (3) agencés les uns à côté des autres sont mis en place, comportant un premier dispositif de réglage et un second dispositif de réglage, grâce auxquels un réflecteur (3) peut basculer autour d'un axe horizontal (4) et autour d'un axe vertical (5), le réflecteur basculant (3) pouvant être déplacé par le premier dispositif de réglage tant par télécommande que manuellement sur le boîtier (2), et comportant un secteur de paroi en forme de douille (6) du boîtier (2), qui est agencé au-dessous de l'axe horizontal (4), qui s'étend par son axe médian en direction de sortie de lumière et qui sert à recevoir un boîtier de réglage à télécommande (7) et également un engrenage en équerre susceptible d'être actionné manuellement sur le boîtier (2) et présentant une paire de roues dentées (8, 9) dont une roue dentée (9) est reliée solidairement en rotation à un arbre rigide (10) qui s'étend verticalement par son axe longitudinal et qui s'engage par son tronçon d'extrémité dirigé vers le haut dans une ouverture de montage (11) dans la paroi latérale supérieure du boîtier (2) et qui présente sur la face extérieure de la paroi latérale supérieure une manette (12) pour sa rotation manuelle, caractérisée en ce que :
- une barrette (35) est formée par le secteur de paroi en forme de douille (6) et par un secteur de paroi en forme de rainure (13) s'étendant entre ledit secteur de paroi et la paroi latérale supérieure du boîtier (2), cette barrette s'étendant entre deux réflecteurs voisins (3, 14) et étant moulée à une distance de la face arrière du boîtier en forme de pot (2) sur la face intérieure de la paroi latérale supérieure et de la paroi latérale inférieure du boîtier (2),
- l'arbre rigide (10) du premier dispositif de réglage est mis en place dans le secteur de paroi en forme de rainure (13) de la barrette (35),
- une ouverture commune (15) servant pour plusieurs réflecteurs (3, 14) dans la paroi arrière du boîtier en forme de pot (2) présente une taille si élevée dans la région (16) du premier dispositif de réglage, vue depuis la face arrière de l'unité d'éclairement, que la face arrière de la barrette (35) peut être déformée à travers l'ouverture (15).

2. Unité d'éclairement selon la revendication 1, caractérisée en ce que la manette (12) de l'arbre (10) est une pièce formant poignée dépassant hors de l'ouverture de montage (12) de la paroi latérale supérieure du boîtier (2) vers l'extérieur, qui s'appuie par un épaulement adjacent (17) contre la région de bordure extérieure de l'ouverture de montage (11).

3. Unité d'éclairement selon l'une ou l'autre des revendications 1 et 2, caractérisée en ce que la face intérieure du secteur de paroi en forme de rainure (13) sert, sur toute sa longueur, de surface de montage pour l'arbre rigide (10).

4. Unité d'éclairement selon l'une quelconque des revendications 1 à 3, caractérisée en ce que la profondeur du secteur de paroi en forme de rainure (13) est supérieure au diamètre extérieur de l'arbre (10).

5. Unité d'éclairement selon l'une quelconque des revendications 1 à 4, caractérisée en ce que le secteur de paroi en forme de rainure (13) est dirigé par son côté ouvert vers la face avant de l'unité d'éclairement, en ce qu'il est moulé par une extrémité sur la surface enveloppe du secteur de paroi en forme de douille (6), et en ce qu'il s'étend par ses deux bordures libres approximativement dans une surface (18), conjointement avec la bordure du secteur de paroi en forme de douille (6), qui est orientée vers la face avant de l'unité d'éclairement.

6. Unité d'éclairement selon l'une quelconque des revendications 1 à 5, caractérisée en ce que la barrette (35) entre le secteur de paroi en forme de douille (6) et la paroi latérale inférieure du boîtier (2) est formée par un tronçon de paroi (19) présentant au moins une nervure de rigidification (20).

7. Unité d'éclairement selon l'une quelconque des revendications 1 à 6, caractérisée en ce que l'ouverture de montage (11) dans la paroi latérale supérieure du boîtier (2) est formée par une douille (21), et le tronçon de surface enveloppe de la douille (21), qui est dirigé vers la face avant de l'unité d'éclairement, est formé par la face intérieure de la paroi latérale supérieure du boîtier (2) et supporte un talon moulé (22) d'un emplacement de montage fixe (23) pour le réflecteur (3) susceptible de basculer.

8. Unité d'éclairement selon l'une quelconque des revendications 1 à 7, caractérisée en ce que les deux réflecteurs (3, 14) en forme de coque recevant entre eux le premier dispositif de réglage sont une unité rigide qui est accouplée au premier dispositif de réglage via un boulon de réglage (24) qui s'étend par son axe longitudinal en direction de sortie de lumière.

9. Unité d'éclairement selon l'une quelconque des revendications 1 à 8, caractérisée en ce que dans la région de la barrette (35), l'ouverture (15) dans la paroi arrière du boîtier (2) correspond, quant à sa taille, au moins à la longueur de la barrette (35).

10. Unité d'éclairement selon l'une quelconque des revendications 1 à 9 caractérisée en ce que l'arbre (10) présente une section transversale en forme de x.

11. Unité d'éclairement selon l'une quelconque des revendications 1 à 10, caractérisée en ce qu'il est prévu, sur la face extérieure de la paroi latérale supérieure du boîtier en forme de pot (2), près de la manette (12) du premier dispositif de réglage, une manette (27) du second dispositif de réglage, et en ce que la manette (27) du second dispositif de réglage est reliée au réflecteur basculant (3) via deux engrenages en équerre (25, 26) et via un arbre rigide horizontal (28) qui accouple les deux engrenages en équerre (25, 26) l'un à l'autre et qui s'engage dans une coque de montage en forme de rainure (29) ménagée dans la face intérieure de la paroi arrière du boîtier (2).
